# DEMANDE DE BREVET EUROPEEN

(11) **EP 4 552 469 A1**
(43) Date de publication de la demande: **14.05.2025**
(21) Numéro de dépôt: 24211703.4
(22) Date de dépôt: 08.11.2024
(51) Int. Cl.: A01D 45/06, A01D 84/00, A01F 15/07

(54) **DISPOSITIF DE DÉPLACEMENT D'UN ANDAIN DISPOSÉ SUR LE SOL**

(30) Priorité: 10.11.2023 FR 2312283
(71) Demandeur: N.V. Depoortere, 8791 Beveren-Leie (BE)
(72) Inventeur: TACK, Johan, 8720 OESELGEM (BE)
(74) Mandataire: Cabinet Beau de Loménie

(57) **Abrégé**

L'invention concerne un dispositif (4) de déplacement d'une nappe continue longitudinale (14) de tiges végétales disposée sur le sol (12), le dispositif (4) étant configuré pour déplacer ladite nappe continue, au moins en partie et de préférence principalement, selon une direction (T) horizontale perpendiculaire à la direction longitudinale (L) de ladite nappe continue.

Le dispositif (4) comprend des moyens d'attache (10) à un engin motorisé (1), des moyens de ramassage (6) configurés pour prélever ladite nappe continue du sol, et un moyen de déplacement latéral (8) de ladite nappe continue ramassée, par exemple s'étendant au moins selon une direction longitudinale.

Le moyen de déplacement latéral (8) s'étend, au moins en partie et de préférence principalement, entre les moyens de ramassage (6) et les moyens d'attache (10) à un engin motorisé.

L'invention concerne également un engin motorisé (1) comprenant un tel dispositif de déplacement (4).

## Description

### Domaine Technique

La présente invention concerne le domaine du traitement de tiges végétales, telles le lin ou le chanvre. L'invention concerne plus spécifiquement le domaine du traitement d'une nappe continue de tiges végétales disposée sur le sol.

### Technique antérieure

Le lin est une plante à fibres. Pour faciliter l'extraction des fibres en vue de leur utilisation notamment dans l'industrie textile, les tiges de lin subissent une opération de rouissage. Cette opération nécessite que, lors de la récolte du lin, après l'arrachage des tiges, celles-ci soient déposées sur le sol sous la forme d'andains, consistant en une nappe continue de tiges parallèles entre elles et alignées dans le sens perpendiculaire à l'avancement de la machine d'arrachage. L'andain est laissé sur le champ pendant une durée suffisante pour que les microorganismes, présents dans le sol, réalisent la dégradation biologique des ciments pectiques qui lient les fibres entre elles. Lorsque cette dégradation est suffisante, le lin est ramassé en vue d'être teillé c'est-à-dire d'être traité dans un site industriel pour l'extraction des fibres et leur nettoyage en vue de leur utilisation dans l'industrie textile.

Il est connu de stocker et de transporter des tiges végétales sous forme de balles agricoles. De telles balles permettent une manipulation facilitée des tiges végétales, notamment d'une nappe continue de tiges végétales, tout en permettant leur déroulage une fois sur le site de destination.

La fabrication d'une balle agricole est obtenue à l'aide d'une enrouleuse tractée, dans le champ, par un engin motorisé. L'enrouleuse est ainsi configurée pour enrouler la nappe continue de tiges végétales en une spirale, au fur et à mesure de la récupération de ladite nappe sur le sol, afin de former la balle agricole.

Cependant, une telle enrouleuse étant tractée par un engin motorisé, ce dernier peut être amené, lors de l'enroulage d'une nappe continue, à rouler sur une nappe continue adjacente. Un tel passage d'une ou plusieurs roues de l'engin motorisé sur une nappe continue adjacente peut alors entraîner un écrasement des tiges végétales, et donc leur détérioration, ou bien encore peut les mélanger à la terre ou à la poussière sous-jacentes avant l'enroulement, ou bien encore peut venir désordonner les tiges entre elles avant l'enroulement. De tels problèmes sont à éviter, notamment afin d'améliorer l'enroulement de la balle agricole et afin d'y limiter l'accumulation de poussière. En particulier, la présence de poussières dans la balle agricole peut conduire, lors du déroulement de la balle agricole, à un risque d'exposition d'opérateurs à une telle poussière.

Il est ainsi connu de proposer des enrouleuses déportées. Contrairement aux enrouleuses standards qui sont positionnées dans l'axe de l'engin motorisé qui les tracte, les enrouleuses déportées sont décalées latéralement par rapport à la direction de déplacement de l'engin motorisé qui les tracte. Il devient alors possible de ramasser une nappe continue et de l'enrouler en balle agricole, tout en limitant les risques de passage des roues de l'engin motorisé sur ladite nappe juste avant son ramassage.

Cependant, de telles enrouleuses déportées sont plus onéreuses et, en raison de leur décalage latéral, plus difficiles à manoeuvrer, notamment dans les virages. De plus, le décalage latéral de telles enrouleuses reste limité, de sorte que leur utilisation ne garantit pas une absence de contact entre les roues de l'engin motorisé et la nappe continue à enrouler.

Par ailleurs, le décalage latéral de telles enrouleuses déportées n'est généralement que d'un seul côté, ce qui peut compliquer la récupération des andains au niveau des bordures du champ. En particulier, en cas d'obstacle empêchant l'engin motorisé de circuler à côté d'une bordure du champ, par exemple une haie ou un mur, il devient plus compliqué d'utiliser l'enrouleuse déportée, sauf à faire circuler l'engin motorisé dans le sens opposé, ce qui conduirait à enrouler la nappe continue en une spirale à l'envers, au regard de la position des capsules de graines à l'extrémité des tiges.

### Exposé de l'invention

La présente invention vise à résoudre les différents problèmes techniques énoncés précédemment. En particulier, la présente invention vise à proposer un dispositif relié à un engin motorisé et permettant de faciliter la récupération d'une nappe continue de tiges végétales au sol, tout en limitant les risques d'écrasement de ladite nappe continue par ledit engin motorisé. Plus précisément, la présente invention vise à proposer un dispositif facilitant l'utilisation d'une enrouleuse tout en gardant des tiges végétales de qualité, dans la balle agricole.

Ainsi, selon un aspect, il est proposé un dispositif de déplacement d'une nappe continue longitudinale de tiges végétales disposée sur le sol, le dispositif étant configuré pour déplacer ladite nappe continue, au moins en partie et de préférence principalement, selon une direction horizontale perpendiculaire à la direction longitudinale de ladite nappe continue. Le dispositif comprend des moyens d'attache à un engin motorisé, des moyens de ramassage configurés pour prélever ladite nappe continue du sol, et un moyen de déplacement latéral de ladite nappe continue ramassée, par exemple s'étendant au moins selon une direction longitudinale. Le moyen de déplacement latéral s'étend, au moins en partie et de préférence principalement, entre les moyens de ramassage et les moyens d'attache à un engin motorisé.

Ainsi, le dispositif selon l'invention permet de déplacer latéralement l'andain destiné à être ramassé et enroulé par une enrouleuse montée à l'arrière d'un engin motorisé, de manière à le positionner au niveau de la voie dudit engin motorisé, c'est-à-dire au niveau de la largeur entre les deux roues d'un même essieu de l'engin motorisé. Un tel dispositif permet alors, d'une part, d'empêcher les roues de l'engin motorisé de rouler sur la nappe continue à enrouler ou sur une nappe continue adjacente, et d'autre part d'utiliser une enrouleuse standard, c'est-à-dire montée dans l'axe de l'engin motorisé. Le dispositif de déplacement permet notamment d'écarter la nappe continue en cours de ramassage, de la nappe continue adjacente ou de tout autre obstacle pouvant empêcher un engin motorisé de circuler, tel qu'une haie ou un mur, de manière à laisser entre les deux un espace suffisant pour le passage des roues de l'engin motorisé.

Le dispositif de déplacement selon la présente invention est en particulier monté à l'avant de l'engin motorisé, et permet donc de déplacer la nappe continue destinée à passer entre les roues de l'engin motorisé, juste avant d'être ramassée et enroulée par l'enrouleuse. L'engin motorisé ne vient donc pas écraser ou désorganiser l'andain à ramasser ni un andain adjacent à celui à ramasser. De plus, le dispositif de déplacement étant monté à l'avant de l'engin motorisé, il est plus facile à manoeuvrer, même en position déportée latéralement, qu'une enrouleuse déportée tractée. Par ailleurs, les manoeuvres de l'engin motorisé sont également facilitées par l'utilisation d'une enrouleuse non-déportée.

Enfin, le déplacement de l'andain avant son ramassage conduit également à l'aérer, à le secouer légèrement et à le séparer des mauvaises herbes présentes, ce qui permet d'en faire tomber la poussière avant qu'il ne soit enroulé en balle agricole. Cela facilite sa récupération en vue de la fabrication de la balle agricole. Il est alors possible d'obtenir une balle agricole avec moins de poussière à l'intérieur, ce qui induit également une plus faible exposition à la poussière pour les opérateurs présents lors du déroulage ultérieur de la balle agricole.

Dans le sens de déplacement des tiges de l'andain, le moyen de déplacement latéral est donc monté, au moins en partie et de préférence principalement, en aval du moyen de ramassage et en amont des moyens d'attache. Par ailleurs, l'engin motorisé, en particulier les essieux de l'engin motorisé, est disposé en aval du dispositif de déplacement et en amont de l'enrouleuse.

Le dispositif de déplacement est ainsi configuré pour déplacer latéralement, au niveau du sol (c'est-à-dire sur le sol), la nappe continue de tiges végétales. Le déplacement latéral est effectué avant le passage (c'est-à-dire en amont) de l'engin motorisé, et en particulier des essieux de l'engin motorisé, sur lequel est monté le dispositif de déplacement.

Dit autrement, le dispositif de déplacement est configuré pour ramasser, déplacer latéralement et relâcher (c'est-à-dire déposer ou étaler ou reposer) sur le sol la nappe continue de tiges végétales, avant le passage de l'engin motorisé. Le moyen de déplacement latéral peut ainsi être orienté pour transporter les tiges depuis les moyens de ramassage, jusqu'à la voie de l'engin motorisé, au niveau de laquelle les tiges sont relâchées (c'est-à-dire déposées ou étalées ou reposées) sur le sol.

Préférentiellement, le dispositif de déplacement est dépourvu de moyens de retournement de la nappe continue de tiges végétales, et éventuellement de moyens de séparation des graines des tiges végétales (ou moyens d'écapsulage ou écapsuleuse), et éventuellement de moyens de mise en balle de la nappe continue de tiges végétales (ou moyens d'enroulage ou enrouleuse).

On comprend donc que la principale, voire unique, fonction du dispositif de déplacement est de déplacer latéralement la nappe continue de tiges végétales sur le sol. Le but du dispositif de déplacement est ainsi de positionner de manière adéquate la nappe continue par rapport à l'engin motorisé sur lequel est monté ledit dispositif de déplacement, en vue des traitements ultérieurs réalisés par ledit engin motorisé ou ses accessoires, attelages et/ou remorques.

Préférentiellement, les moyens de ramassage comportent un pick-up rotatif muni de doigts métalliques, rétractables ou non.

Le pick-up rotatif permet de ramasser les tiges de la nappe continue posée sur le sol, tout en limitant la prise de poussière. La présence de doigts métalliques rétractables peut permettre de faciliter le transfert des tiges ramassées du pick-up à la courroie du moyen de déplacement latéral et limiter la prise de poussières.

Préférentiellement, les moyens de ramassage comprennent également une roue configurée pour rouler sur la surface supérieure de la nappe continue, le pick-up étant monté, de préférence, coulissant en hauteur par rapport à ladite roue, et le pick-up étant configuré pour tourner dans un sens opposé à celui de ladite roue.

Le pick-up peut ainsi être précédé d'une roue qui, lors du déplacement du dispositif de déplacement, vient rouler sur la surface supérieure de la nappe continue. Une telle roue permet de maintenir constant l'écartement entre le pick-up et la nappe continue, quelles que soient les irrégularités du sol sur lequel est posée la nappe continue. En particulier, l'écartement peut être réglé par coulissement en hauteur du pick-up par rapport à ladite roue.

Préférentiellement, le moyen de déplacement latéral comporte une ou plusieurs courroies, de préférence munies de picots, s'étendant entre un cylindre avant positionné à proximité des moyens de ramassage ou faisant partie des moyens de ramassage, et un cylindre arrière positionné à proximité des moyens d'attache ou faisant partie des moyens d'attache, les cylindres avant et arrière pour une même courroie étant parallèles.

Afin de déplacer les tiges ramassées par le pick-up, le moyen de déplacement latéral comporte une ou plusieurs courroies qui s'étendent entre deux rouleaux d'extrémité et qui sont mises en rotation autour desdits rouleaux. La ou les courroies sont notamment orientées pour transporter les tiges depuis le pick-up jusqu'à la voie de l'engin motorisé au niveau de laquelle les tiges sont relâchées sur le sol.

Selon un mode de réalisation, le moyen de déplacement latéral est configuré pour permettre un déplacement latéral du cylindre avant par rapport au cylindre arrière de manière à obtenir un angle entre la direction longitudinale du moyen de déplacement latéral et la direction longitudinale de la nappe continue.

Dans un tel mode de réalisation, l'inclinaison latérale du dispositif de déplacement est obtenue par déplacement latéral du cylindre avant : on obtient alors un moyen de déplacement latéral dont la direction longitudinale s'étend sensiblement horizontalement, avec un angle par rapport à la direction longitudinale de déplacement de l'engin motorisé.

Préférentiellement, les moyens d'attache sont configurés pour permettre le montage du dispositif sur l'avant d'un engin motorisé, par exemple en amont de l'essieu avant de l'engin motorisé, par exemple à l'avant de l'engin motorisé.

L'engin motorisé est de préférence un engin agricole, par exemple un tracteur.

Les moyens d'attaches sont configurés pour s'adapter aux différents systèmes présents sur les engins motorisés susceptibles de déplacer le dispositif de déplacement selon l'invention, et une enrouleuse. Le dispositif de déplacement étant destiné à être monté à l'avant, les moyens de fixation sont configurés en conséquence.

Selon un autre mode de réalisation, les moyens d'attache sont configurés pour permettre une rotation du dispositif de déplacement par rapport à l'engin motorisé, autour d'un axe vertical, de manière à obtenir un angle entre la direction longitudinale du moyen de déplacement latéral et la direction longitudinale de la nappe continue.

Dans un tel mode de réalisation, le moyen de déplacement latéral conserve sa géométrie mais est pivoté par rapport à l'engin motorisé, afin de permettre un angle entre sa direction longitudinale et celle dudit engin motorisé.

Selon un autre aspect, il est également proposé un engin motorisé, par exemple un engin agricole tel qu'un tracteur, comportant un dispositif de déplacement tel que décrit précédemment, le dispositif de déplacement étant monté, par les moyens d'attache, à l'avant de l'engin motorisé, de préférence dans un plan vertical passant sensiblement au centre d'un essieu avant de l'engin motorisé, de manière à éviter que les roues de l'engin motorisé ne viennent écraser les tiges végétales.

Préférentiellement, le dispositif est configuré pour positionner, par déplacement latéral, la nappe continue au niveau de la voie de l'engin motorisé, c'est-à-dire entre les roues d'un même essieu, de l'engin motorisé.

Préférentiellement, l'engin motorisé comporte également un dispositif d'enroulement de la nappe continue en balle, ledit dispositif d'enroulement étant monté à l'arrière de l'engin motorisé et positionné dans l'axe de l'engin motorisé.

L'engin peut alors utiliser facilement et efficacement une enrouleuse standard, non-déportée, pour récupérer et enrouler la nappe continue d'andain qui a été préalablement décalée latéralement par le dispositif de déplacement.

Préférentiellement, le pick-up du dispositif de déplacement, et éventuellement la ou les courroies du moyen de déplacement latéral, est entraîné en rotation à la même vitesse angulaire que les roues de l'engin motorisé.

Une telle synchronisation des vitesses de rotation des moyens du dispositif de déplacement latéral et des roues du tracteur, permet d'avoir une vitesse de traitement de la nappe continue qui soit la même tout le long de l'engin motorisé. Une telle synchronisation peut être obtenue notamment par une connexion du pick-up et/ou de la ou des courroies du dispositif de déplacement à des moyens d'entraînement de l'engin motorisé, qui sont synchronisés avec la vitesse de déplacement dudit engin motorisé.

### Brève description des dessins

[Fig. 1] La figure 1 représente, de manière schématique, un engin motorisé équipé d'une enrouleuse à l'arrière, et d'un dispositif de déplacement selon la présente invention à l'avant, vu de côté ;
[Fig. 2] La figure 2 représente, de manière schématique, l'engin motorisé de la figure 1, vu du dessus, avec un dispositif de déplacement selon un premier mode de réalisation ;
[Fig. 3] La figure 3 représente, de manière schématique, l'engin motorisé de la figure 1, vu du dessus, avec un dispositif de déplacement selon un deuxième mode de réalisation ;
[Fig. 4] La figure 4 représente, de manière schématique, l'engin motorisé de la figure 1, avec le dispositif de déplacement en position relevée ; et
[Fig. 5] La figure 5 représente, de manière schématique, un engin motorisé équipé d'une enrouleuse à l'arrière, et d'un dispositif de déplacement selon une variante de réalisation de l'invention à l'avant, vu de côté.

### Description des modes de réalisation

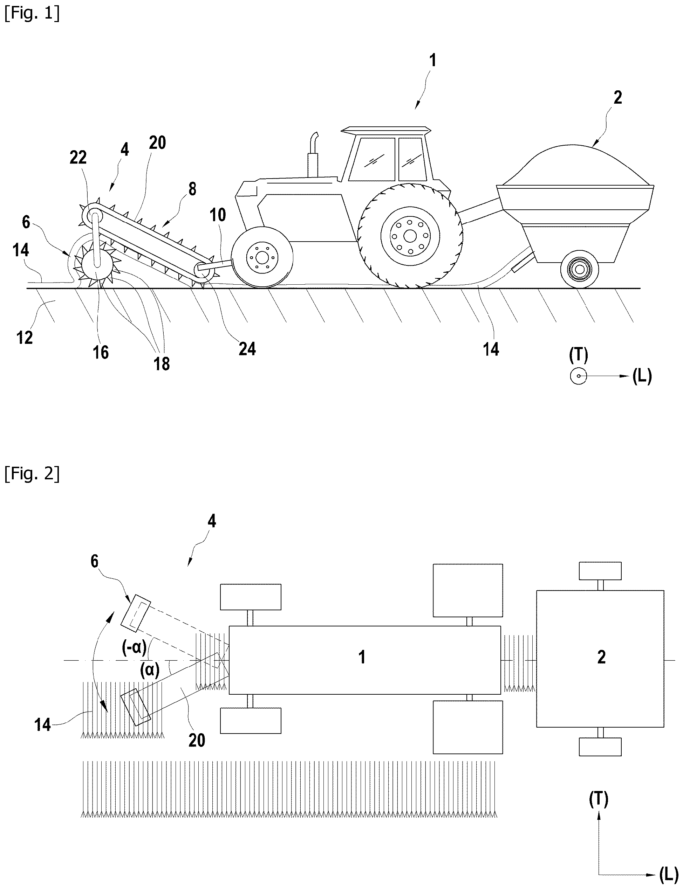

La figure 1 illustre de manière schématique un exemple d'engin motorisé 1 avec une enrouleuse 2 montée, non-déportée, à l'arrière de l'engin motorisé 1, et un dispositif 4 de déplacement d'une nappe continue selon la présente invention, monté à l'avant de l'engin motorisé.

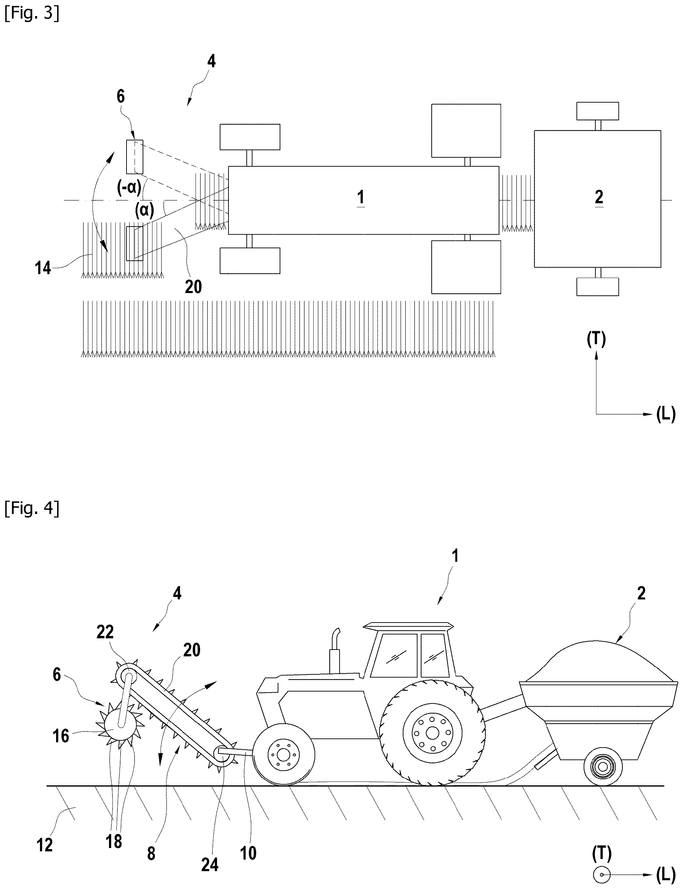

Tel qu'illustré sur les figures 1 et 4, le dispositif 4 de déplacement d'une nappe continue est poussé par l'engin motorisé 1 à l'avant duquel il est monté. Le dispositif 4 de déplacement d'une nappe continue comprend, successivement, de l'avant vers l'arrière, des moyens de ramassage 6, un moyen de déplacement latéral 8, et des moyens d'attache 10.

Les moyens de ramassage 6 permettent de prélever du sol 12 une nappe continue 14 de tiges constituant l'andain. La nappe continue 14 repose en particulier sur le sol selon une direction horizontale longitudinale L le long de laquelle l'engin motorisé 1 se déplace. Le moyen de déplacement latéral 8 est apte à translater latéralement, dans un plan horizontal, ladite nappe continue 14, la nappe continue se retrouvant positionnée alors au niveau de la voie de l'engin motorisé à l'issue du déplacement latéral. Plus précisément, la nappe continue 14 est déplacée, au moins en partie, dans une direction horizontale transversale T perpendiculaire à la direction longitudinale L. Une fois la nappe continue positionnée dans la voie de l'engin motorisé 1, celui-ci peut se déplacer au-dessus, sans rouler sur elle, et l'enrouleuse 2 peut alors récupérer et enrouler la nappe continue 14 en balle agricole. L'ensemble de ces opérations de ramassage, de déplacement latéral selon la direction transversale T et d'enroulement en balle agricole, est réalisé de manière continue pendant le déplacement, selon la direction longitudinale L, de l'engin 1 poussant le dispositif de déplacement latéral 4 et tractant l'enrouleuse 2.

Selon le mode préférentiel illustré, les moyens de ramassage 6 comportent un pick-up 16 muni de doigts métalliques 18, pouvant être rétractables ou non. Le pick- up 16 tourne sur lui-même dans un sens contraire au sens de rotation des roues de l'engin 1, de sorte que les doigts métalliques 18, venant en contact avec la nappe continue 14, soulèvent celle-ci et l'entraînent en rotation à la surface comme cela apparaît sur la figure 1. Les moyens de ramassage 6 peuvent également comprendre une roue (non représentée) précédant le pick-up 16 et qui, lors du déplacement de l'engin 1, vient rouler sur la surface supérieure de la nappe continue 14. Cette roue, sur laquelle le pick-up 16 est monté réglable en hauteur, permet de maintenir constant l'écartement entre le pick-up 16 et la nappe continue 14, quelles que soient les irrégularités du sol 12.

Selon une première variante illustrée sur les figures 1 et 4, le moyen de déplacement 8 est constitué par une courroie 20 munie de picots, qui est tendue entre un cylindre avant 22 et un cylindre arrière 24, selon une direction longitudinale. La direction longitudinale de la courroie est sensiblement la direction longitudinale du moyen de déplacement 8, et présente, comme cela est expliqué ci-dessous, un angle α (alpha) avec la direction longitudinale L de la nappe continue 14. Le cylindre avant 22 est associé au pick-up 16 de telle sorte que la nappe 14 prélevée par les doigts 18 du pick-up soit entraînée sur la courroie 20 par les picots, et plus particulièrement par les picots d'un brin inférieur de la courroie 20. Le cylindre arrière 24 est quant à lui disposé du côté des moyens d'attache 10, et à proximité du sol 12, de manière à ce que la nappe entraînée par les picots de la courroie 20 et déplacée latéralement, soit déposée sur le sol 12 le plus proche possible de celui-ci, de manière à éviter toute perturbation. Le cylindre avant 22 et le cylindre arrière 24 sont positionnés parallèlement, selon une direction sensiblement horizontale, de manière à pouvoir tendre la courroie 20 entre eux et de sorte que les tiges déplacées latéralement restent sensiblement dans un plan comportant une direction horizontale, au cours de leur déplacement de l'avant vers l'arrière.

Une fois la nappe 14 reposée sur le sol 12, au niveau de la voie de l'engin motorisé 1, ce dernier peut alors rouler au-dessus d'elle, sans que les roues ne viennent l'écraser, puis l'enrouleuse 2 récupère et enroule en spirale la nappe 14 afin de former une balle agricole.

La figure 2 illustre un premier mode de réalisation du moyen de déplacement 8. Dans ce premier mode de réalisation, l'angle α (alpha) entre la direction longitudinale du moyen de déplacement 8 et la direction longitudinale L de la nappe continue 14 est obtenue par pivotement de la courroie 20 et des cylindres avant et arrière 22, 24 autour d'un axe vertical situé au niveau ou à proximité des moyens d'attache 10.

Plus précisément, les cylindres avant et arrière 22, 24, et la courroie 20 présentent une forme générale rectangulaire dont la longueur correspond à la distance entre les deux cylindres 22, 24 et s'étend selon la direction longitudinale du moyen de déplacement 8. Afin de positionner les moyens de ramassage 6 en regard de la nappe continue 14, c'est-à-dire de manière décalée latéralement par rapport à l'axe de déplacement de l'engin motorisé 1 et donc par rapport aux moyens d'attache 10, les cylindres 22, 24 et la courroie 20 sont montés pivotant autour d'un axe vertical situé, de préférence, au niveau des moyens d'attache 10, par exemple au niveau de la liaison entre le moyen de déplacement 8 et les moyens d'attache 10 ou au niveau de la liaison entre les moyens d'attache 10 et l'engin motorisé 1.

Il suffit alors de faire pivoter les cylindres 22, 24 et la courroie 20 d'un angle α (alpha) adéquat pour permettre le positionnement des moyens de ramassage 6 en regard de la nappe continue 14.

Un tel mode de réalisation conduit notamment à avoir des moyens de ramassage 6 qui sont inclinés d'un angle α (alpha) par rapport à la direction transversale T, et donc inclinés par rapport à la direction longitudinale L de la nappe continue 14. En particulier, les cylindres 22, 24 sont inclinés par rapport à la direction transversale T. Néanmoins, les tiges peuvent toujours être ramassées, déplacées puis déposées au niveau de la voie de l'engin motorisé 1 de manière à permettre leur récupération par l'enrouleuse 2 dans un second temps.

Un tel mode de réalisation permet donc de positionner les moyens de ramassage 6 d'un côté ou l'autre de l'engin motorisé 1, afin de déplacer latéralement une nappe continue 14 située d'un côté ou de l'autre de l'engin motorisé 1.

La figure 3 illustre un deuxième mode de réalisation du moyen de déplacement 8. Dans ce deuxième mode de réalisation, l'angle α (alpha) entre la direction longitudinale du moyen de déplacement 8 et la direction longitudinale L de la nappe continue 14 est obtenue par déformation latérale de la structure formée par la courroie 20 et des cylindres avant et arrière 22, 24.

Plus précisément, le moyen de déplacement 8 peut comprendre deux ensembles latéraux formés, chacun, par une courroie 20 montée entre deux cylindres 22, 24 correspondants. Les deux ensembles sont positionnés côte à côte de manière à ce que les courroies 20 restent adjacentes entre elles. Cependant, et comme dans le premier mode de réalisation illustré à la figure 2, chaque ensemble est monté pivotant autour d'un axe vertical, les deux axes verticaux étant décalés entre eux de la distance séparant les deux courroies 20. Ainsi, la rotation simultanée des deux ensembles va conduire à obtenir des cylindres avant 22 orientés selon des directions parallèles mais différentes, et des cylindres arrière 24 orientés selon des directions parallèles mais différentes.

Dans ce cas, le pivotement des deux ensembles conduira à obtenir un déplacement latéral des moyens de ramassage 6, qui resteront néanmoins parallèles à la direction transversale T et donc perpendiculaires à la direction à la direction longitudinale L de la nappe continue 14, c'est-à-dire à obtenir un moyen de déplacement 8 sous la forme d'un parallélogramme déformable.

Un tel deuxième mode de réalisation permet donc également de positionner les moyens de ramassage 6 d'un côté ou l'autre de l'engin motorisé 1, afin de déplacer latéralement une nappe continue 14 située d'un côté ou de l'autre de l'engin motorisé 1.

Comme on peut le constater sur les figures 2 et 3, le dispositif 4 de déplacement permet à l'engin motorisé 1 de se déplacer à côté de la nappe continue adjacente, sans rouler dessus, tout en faisant passer la nappe continue en cours de ramassage, au niveau de la voie de l'engin motorisé 1 pour éviter également à l'engin motorisé 1 de rouler dessus et pour permettre son ramassage par une enrouleuse standard montée dans l'axe de l'engin 1. Le dispositif 4 de déplacement permet ainsi d'écarter la nappe continue en cours de ramassage, de la nappe continue adjacente, de manière à laisser entre les deux un espace suffisant pour le passage des roues de l'engin motorisé 1.

Un tel déplacement de la nappe continue peut également être avantageux lorsque celle-ci se trouve, non pas à côté d'une nappe continue adjacente, mais le long d'une zone inaccessible pour l'engin motorisé 1, telle qu'une haie ou un mur. Le dispositif 4 de déplacement permet alors de libérer suffisamment de place entre la nappe continue à ramasser et la zone inaccessible, pour permettre à l'engin motorisé de circuler, sans pour autant abîmer ladite nappe continue à ramasser.

Il est enfin également possible d'avoir un moyen de levage (non représenté) monté au niveau des moyens d'attache 10. Le moyen de levage peut ainsi être configuré pour soulever ou abaisser le dispositif 4 de déplacement par rapport au sol 12, pour permettre de déplacer ou non la nappe continue. Ainsi, et comme illustré sur la figure 4, le moyen de levage peut permettre de relever le dispositif 4 de déplacement au-dessus du sol 12 lorsqu'il n'est pas nécessaire de l'utiliser. Une telle configuration est notamment utile en fin de nappe continue, lorsque l'engin motorisé doit manoeuvrer, par exemple faire demi-tour, pour venir se positionner dans l'axe de la nappe continue suivante : le soulèvement du dispositif 4 de déplacement permet alors de faciliter de telles manoeuvres sans venir désordonner le début de la nappe continue suivante à récupérer.

Le contrôle des moyens de levage du dispositif 4 de déplacement peut notamment se faire depuis la cabine de pilotage de l'engin motorisé 1.

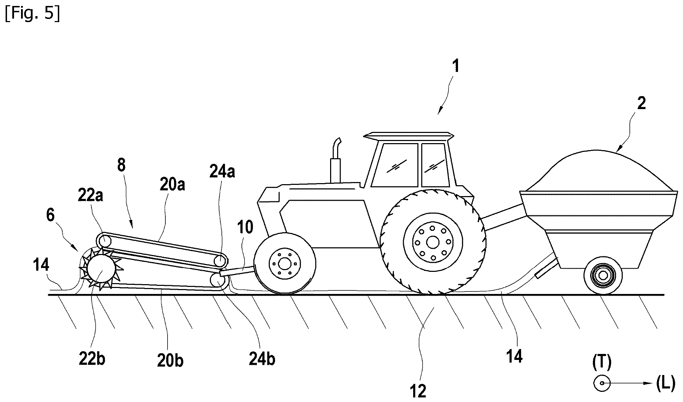

La figure 5 illustre une deuxième variante du dispositif de déplacement latéral de nappe continue selon la présente invention.

Selon cette deuxième variante illustrée à la figure 5, le moyen de déplacement latéral 8 comprend, voire est constitué, par deux courroies 20a, 20b tendues, chacune, entre un cylindre avant 22a, 22b et un cylindre arrière 24a, 24b selon une direction longitudinale. L'ensemble formé par la courroie 20a et les deux cylindres 22a, 24a est disposé au-dessus de l'ensemble formé par la courroie 20b et les deux cylindres 22a, 24a, de manière à ce que le brin inférieur de la courroie 20a vienne en regard du brin supérieur de la courroie 20b.

La direction longitudinale des courroies 20a, 20b est sensiblement la direction longitudinale du moyen de déplacement latéral 8, et présente, comme cela est expliqué ci-dessus, un angle α (alpha) avec la direction longitudinale L de la nappe continue 14. Le cylindre avant 22b est associé au, voire fait partie du, pick-up 16 de telle sorte que la courroie 20b entraîne le pick-up 16 et de telle sorte que la nappe 14 prélevée par les doigts 18 du pick-up soit pincée entre le brin supérieur de la courroie 20b et le brin inférieur de la courroie 20a, puis entraînée en direction des moyens d'attache. Les cylindres arrières 24a, 20b sont quant à eux disposés du côté des moyens d'attache 10, et à proximité du sol 12, de manière à ce que la nappe entraînée par les brins des courroies 20a, 20b et déplacée latéralement, soit déposée sur le sol 12 le plus proche possible de celui-ci, de manière à éviter toute perturbation. Les cylindres avant 22a, 22b et les cylindres arrières 24a, 24b sont positionnés parallèlement, selon une direction sensiblement horizontale, de manière à pouvoir tendre les courroies 20a, 20b entre eux et de sorte que les tiges déplacées latéralement restent sensiblement dans un plan comportant une direction horizontale, au cours de leur déplacement de l'avant vers l'arrière.

Comme expliqué précédemment pour la première variante, l'angle α (alpha) entre la direction longitudinale du moyen de déplacement latéral 8 et la direction longitudinale L de la nappe continue 14 peut être obtenue par pivotement des courroies 20a, 20b et des cylindres avant et arrière 22a, 22b, 24a, 24b autour d'un axe vertical situé au niveau ou à proximité des moyens d'attache 10, ou bien par déformation latérale de la structure formée par les courroies 20a, 20b et les cylindres avant et arrière 22a, 22b, 24a, 24b.

Ainsi, grâce au dispositif de déplacement latéral de nappe continue selon la présente invention, il devient possible de récupérer une nappe continue de tiges avec une enrouleuse montée dans l'axe de déplacement de l'engin motorisé, et sans avoir à rouler sur la nappe continue ou sur une nappe continue adjacente au préalable. Il est alors plus facile de manoeuvrer l'engin motorisé, et les balles agricoles obtenues à la sortie de l'enrouleuse sont de meilleure qualité, avec moins de poussière et des tiges moins désordonnées.

## Revendications

1. Dispositif (4) de déplacement d'une nappe continue (14) longitudinale de tiges végétales disposée sur le sol (12), le dispositif (4) étant configuré pour déplacer ladite nappe continue (14), au moins en partie et de préférence principalement, selon une direction horizontale perpendiculaire (T) à la direction longitudinale (L) de ladite nappe continue (14), dans lequel le dispositif (4) comprend des moyens d'attache (10) à un engin motorisé (1), des moyens de ramassage (6) configurés pour prélever ladite nappe continue du sol, et un moyen de déplacement latéral (8) de ladite nappe continue ramassée, par exemple s'étendant au moins selon une direction longitudinale, dans lequel le moyen de déplacement latéral (8) s'étend, au moins en partie et de préférence principalement, entre les moyens de ramassage (6) et les moyens d'attache (10) à un engin motorisé (1).

2. Dispositif (4) selon la revendication 1, dans lequel les moyens de ramassage (6) comportent un pick-up (16) rotatif muni de doigts métalliques (18), rétractables ou non.

3. Dispositif (4) selon la revendication précédente, dans lequel les moyens de ramassage (6) comprennent également une roue configurée pour rouler sur la surface supérieure de la nappe continue (14), le pick-up (16) étant monté, de préférence, coulissant en hauteur par rapport à ladite roue, et dans lequel le pick-up (16) est configuré pour tourner dans un sens opposé à celui de ladite roue.

4. Dispositif (4) selon l'une quelconque des revendications précédentes, dans lequel le moyen de déplacement latéral (8) comporte une ou plusieurs courroies (20, 20a, 20b), de préférence munies de picots, s'étendant entre un cylindre avant (22, 22a, 22b) positionné à proximité des moyens de ramassage (6) ou faisant partie des moyens de ramassage (6), et un cylindre arrière (24, 24a, 24b) positionné à proximité des moyens d'attache (10) ou faisant partie des moyens d'attache (10), les cylindres avant et arrière pour une même courroie étant parallèles.

5. Dispositif (4) selon la revendication précédente, dans lequel le moyen de déplacement latéral (8) est configuré pour permettre un déplacement latéral du cylindre avant (22, 22a, 22b) par rapport au cylindre arrière (24, 24a, 24b) de manière à obtenir un angle (α) entre la direction longitudinale du moyen de déplacement latéral (8) et la direction longitudinale (L) de la nappe continue (14).

6. Dispositif (4) selon l'une quelconque des revendications précédentes, dans lequel les moyens d'attache (10) sont configurés pour permettre le montage du dispositif (4) sur l'avant d'un engin motorisé (1), par exemple un tracteur.

7. Dispositif (4) selon l'une quelconque des revendications précédentes, dans lequel les moyens d'attache (10) sont configurés pour permettre une rotation du dispositif (4) de déplacement par rapport à l'engin motorisé (1), autour d'un axe vertical, de manière à obtenir un angle (α) entre la direction longitudinale du moyen de déplacement latéral (8) et la direction longitudinale (L) de la nappe continue (14).

8. Engin motorisé (1), par exemple engin agricole tel qu'un tracteur, comportant un dispositif (4) de déplacement selon l'une quelconque des revendications précédentes, le dispositif (4) de déplacement étant monté, par les moyens d'attache (10), à l'avant de l'engin motorisé (1), de préférence dans un plan vertical passant sensiblement au centre d'un essieu avant de l'engin motorisé, de manière à éviter que les roues de l'engin motorisé (1) ne viennent écraser les tiges végétales.

9. Engin motorisé (1) selon la revendication précédente, dans lequel le dispositif (4) est configuré pour positionner, par déplacement latéral, la nappe continue (14) au niveau de la voie de l'engin motorisé (1), c'est-à-dire entre les roues d'un même essieu, de l'engin motorisé.

10. Engin motorisé selon la revendication 8 ou 9, comportant également un dispositif (2) d'enroulement de la nappe continue en balle, ledit dispositif (2) d'enroulement étant monté à l'arrière de l'engin motorisé (1) et positionné dans l'axe de l'engin motorisé (1).
